**Europäisches Patentamt**

**European Patent Office**

**Office européen des brevets**

(19)

(11) Veröffentlichungsnummer : **0 025 567**
**B1**

## (12) EUROPÄISCHE PATENTSCHRIFT

(45) Veröffentlichungstag der Patentschrift :
24.08.83

(21) Anmeldenummer : 80105302.6

(22) Anmeldetag : 04.09.80

(51) Int. Cl.³ : **G 01 P 3/486**, **G 01 P 1/08**,
**G 01 P 1/10**, **G 01 D 7/12**

(54) Optische Anordnung zum Überwachen kritischer Drehzahlen rotierender Einrichtungen.

(30) Priorität : 12.09.79 DE 2936908

(43) Veröffentlichungstag der Anmeldung :
25.03.81 Patentblatt 81/12

(45) Bekanntmachung des Hinweises auf die Patenterteilung : 24.08.83 Patentblatt 83/34

(84) Benannte Vertragsstaaten :
FR GB IT

(56) Entgegenhaltungen :
CH A 555 573
CH A 557 538
DE A 2 730 737
DE B 1 174 093
GB A 1 312 797
US A 4 006 371
US A 4 104 573

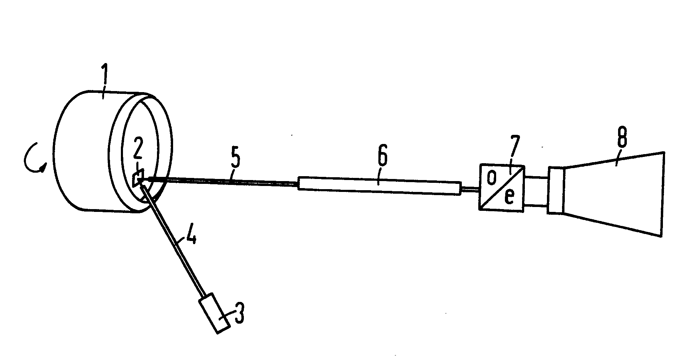

BBC-NACHRICHTEN, Band 54, Mai-Juni 1972,
Seiten 166-170 Mannheim, DE. G. ROPPELT :
« Fotoelektrische Drehzahlmessung » *Seite 166,
Spalte 2, Zeile 26, Seite 166, Spalte 3, Zeile 15 ;
Seite 167, Figur 2*

(73) Patentinhaber : SIEMENS AKTIENGESELLSCHAFT
Berlin und München Wittelsbacherplatz 2
D-8000 München 2 (DE)

(72) Erfinder : Fromm, Ingrid, Dipl.-Phys.
Jawlenskystrasse 10
D-8000 München 71 (DE) .

## Optische Anordnung zum Überwachen kritischer Drehzahlen rotierender Einrichtungen

Die vorliegende Erfindung betrifft eine optische Anordnung zum Überwachen kritischer Drehzahlen rotierender Einrichtungen.

Bei schnell bewegten Rotoren, wie beispielsweise Turbinen, Zentrifugen, Maschinenwellen usw. tritt häufig das Problem auf, daß eine bestimmte kritische Drehzahl nicht überschritten oder die betreffende Einrichtung nicht im Bereich einer kritischen Drehzahl betrieben werden darf.

Bisher bekannte Methoden zur Drehzahlmessung bzw. Drehzahlüberwachung bedienen sich entweder rein mechanischer oder elektromagnetischer Hilfsmittel. Die Meßverfahren mittels rein mechanischer Hilfsmittel haben bekannte Nachteile, wie relativ hoher Verschleiß und damit kurze Lebensdauer und darüber hinaus den Nachteil, daß sie auf Grund der notwendigen mechanischen Kopplung mit dem zu überwachenden Rotor jeweils ausschließlich am Standort der zu überwachenden Einrichtung installiert sein müssen. Elektromagnetische Drenzahlmeßverfahren haben zwar den Vorteil gegenüber rein mechanischen Drehzahlmeßverfahren, daß sie nicht im Hinblick auf ihre räumliche Anordnung an den Aufstellungsort der zu überwachenden Maschine gebunden sein müssen. Es kann aber in bestimmten Fällen nachteilig sein, daß zwischen der zu überwachenden Einrichtung und der messenden und/oder anzeigenden Einrichtung eine elektrische Verbindung besteht.

Aus BBC-Nachrichten, Mai/Juni 1972, S. 166-170 ist eine optische Anordnung zur Überwachung der Drehzahl von rotierenden Einrichtungen, bei der am Rotor ein Reflektor angeordnet ist, der von einer Lichtquelle beleuchtet wird, und bei der die entstehenden Lichtimpulse von einem opto-elektrischen Wandler aufgenommen werden, bekannt.

Aus Fig. 1 der CH-A-555 573 ist die Verwendung eines Schallgebers zur Überwachung einer zulässigen Höchstdrehzahl bekannt.

Der vorliegenden Erfindung liegt die Aufgabe zugrunde, eine optische Anordnung zum Überwachen kritischer Drehzahlen rotierender Einrichtungen zu schaffen, die die weiter oben erwähnten Nachteile nicht aufweist. Es soll eine verschleißfreie Anordnung zur Verfügung gestellt werden, die weder an den Aufstellungsort der zu überwachenden Einrichtung gebunden ist noch eine elektrische Verbindung mit der zu überwachenden Einrichtung benötigt. Außerdem soll die Anordnung einen besonders einfachen und störungssicheren Aufbau besitzen.

Die der Erfindung zugrundeliegende Aufgabe wird durch eine optische Anordnung zum Überwachen kritischer Drehzahlen rotierender Einrichtungen nach dem Oberbegriff des Anspruchs 1 gelöst, die dadurch gekennzeichnet ist, daß an einen Lichtwellenleiter ein optoelektrischer Wandler angeschlossen ist, dessen elektrischer Ausgang mit einem einen Warnton erzeugenden Schallgeber verbunden ist, daß der Schallgeber als piezokeramische Platte mit einem Resonator realisiert ist und daß der Resonator eine Eigenresonanz aufweist, die an die durch die kritische Drehzahl hervorgerufene Pulsfrequenz des Ausgangsstrahls angepaßt ist.

Die erfindungsgemäße optische Anordnung hat den Vorteil, daß keine mechanisch bewegten Teile benötigt werden, daß zwischen der zu überwachenden Einrichtung und der optischen Anordnung keinerlei elektrische Verbindung benötigt wird und daß die optische Anordnung an einem von dem Rotor entfernten Ort, insbesondere in einem Kontrollraum, angeordnet sein kann.

Weiterbildungen der Erfindung sind durch die in den Unteransprüchen angegebenen Merkmale gekennzeichnet.

Im folgenden wird die Erfindung an Hand einer ein Ausführungsbeispiel für die Erfindung betreffenden Figur näher erläutert.

Die Figur zeigt den schematischen Aufbau der erfindungsgemäßen optischen Anordnung mit einem an dem zu überwachenden Rotor 1 angeordneten Reflektor 2, einer Lichtquelle 3, die über einen Eingangsstrahl 4 und einen Ausgangsstrahl 5 über einen Lichtwellenleiter 6 auf einen optoelektrischen Wandler 7 wirkt, an den ein Schallgeber 8 angeschlossen ist. Der Reflektor 2 kann entweder als Spiegel oder als Glasprisma realisiert sein. An diesem Reflektor 2 wird der Eingangsstrahl 4 jeweils in einer bestimmten Drehstellung des Rotors 1 reflektiert. Diese Reflektion erfolgt entsprechend der Rotorbewegung, wobei das reflektierte Licht ein der Drehzahl des Rotors entsprechendes gepulstes Licht darstellt. Dieses gepulste Licht wird über den Lichtwellenleiter 6 an den optoelektrischen Wandler 7 geliefert. Der optoelektrische Wandler ist in dem gezeigten Ausführungsbeispiel als Fotoelement realisiert.

Eine Weiterbildung der Erfindung sieht vor, daß der optoelektrische Wandler als Fotodiode realisiert ist. Die Lichtquelle 3 ist in dem gezeigten Ausführungsbeispiel als Kohärenzlichtquelle, nämlich als Laserdiode, realisiert.

Eine andere Weiterbildung der Erfindung sieht vor, daß die Lichtquelle 3 als Inkohärenzlichtquelle, beispielsweise als lichtemittierende Diode LED, realisiert ist.

Die Lichtquelle 3 kann gemäß der Erfindung entweder ein Dauerlicht abgeben oder entsprechend der kritischen Drehzahl der zu überwachenden Einrichtung und der gewünschten Frequenz des von dem Schallgeber abzugeben — den Warntons gepulstes Licht abgeben.

Der Schallgeber 8 ist erfindungsgemäß als piezokeramische Platte mit einem Resonator realisiert. Dieser Resonator weist eine Eigenresonanz auf, die an die durch die kritische Drehzahl hervorgerufene Pulsfrequenz des Ausgangsstrahls angepaßt ist. Dazu wird zweckmäßig die Größe der piezokeramischen Platte so gewählt, daß ihre Eigenresonanz mit der kritischen Frequenz zusammenfällt. Der auf diese kritische Frequenz abgestimmte Resonator dient zur akustischen Verstärkung des abzugebenden Warntons.

Der Lichtwellenleiter 6 kann erfindungsgemäß entweder aus einem Einfaser- oder aus einem Mehrfaserlichtwellenleiter bestehen.

Die vorliegende Erfindung zeichnet sich durch ihre besondere Einfachheit, ihre Verschleißfestigkeit und dadurch aus, daß keinerlei elektrische Verbindungen zwischen den betreffenden Maschinenraum und einem ggfs. vorhandenen Kontrollraum bestehen muß.

Gemäß der vorliegenden Erfindung ist in einem anderen Ausführungsbeispiel vorgesehen, daß mehrere Reflektoren gleichmäßig verteilt auf dem Rotor angebracht sind, so daß eine günstige Abstimmung zwischen der betreffenden kritischen Drehzahl und dem Resonanzverhalten der piezokeramischen Platte und/oder dem zugehörigen Resonator ermöglicht ist.

Die vorliegende Erfindung ist durch entsprechend vorzusehende zusätzliche Einrichtungen auch dazu geeignet, eine Drehzahlmessung über den gesamten Drehzahlbereich der zu überwachenden Einrichtung vorzunehmen.

## Ansprüche

1. Optische Anordnung zum Überwachen kritischer Drehzahlen rotierender Einrichtungen, bei der an einem zu überwachenden Rotor zumindest ein Reflektor in Nähe des Umfanges des Rotors angeordnet ist und bei der in einem Abstand und unter einem geeigneten Einfallswinkel zu dem Reflektor eine Lichtquelle oder das Ende eines Lichtwellenleiters angeordnet ist, die oder das einen Eingangsstrahl in Richtung des Reflektors sendet, wobei ein weiterer Lichtwellenleiter in einem geeigneten Abstand und unter einem geeigneten Ausfallswinkel in bezug auf den Reflektor so angeordnet ist, daß ein Ausgangsstrahl, der durch Reflexion am Reflektor entsteht, auf die Eingangsstirnfläche dieses Lichtwellenleiters trifft, dadurch gekennzeichnet, daß an den weiteren Lichtwellenleiter (6) ein optoelektrischer Wandler (7) angeschlossen ist, dessen elektrischer Ausgang mit einem einen Warnton erzeugenden Schallgeber (8) verbunden ist, daß der Schallgeber (8) als piezokeramische Platte mit einem Resonator realisiert ist und daß der Resonator eine Eigenresonanz aufweist, die an die durch die kritische Drehzahl hervorgerufene Pulsfrequenz des Ausgangsstrahls (5) angepaßt ist.

2. Optische Anordnung nach Anspruch 1, dadurch gekennzeichnet, daß der optoelektrische Wandler (7) als Fotoelement realisiert ist.

3. Optische Anordnung nach Anspruch 1, dadurch gekennzeichnet, daß der optoelektrische Wandler (7) als Fotodiode realisiert ist.

4. Optische Anordnung nach Anspruch 1, dadurch gekennzeichnet, daß die Lichtquelle (3) eine Kohärenzlichtquelle ist.

5. Optische Anordnung nach Anspruch 1, dadurch gekennzeichnet, daß der Reflektor (2) als Spiegel realisiert ist.

6. Optische Anordnung nach Anspruch 1, dadurch gekennzeichnet, daß der Reflektor (2) als teilweise Verspiegelung der Rotoroberfläche realisiert ist.

7. Optische Anordnung nach Anspruch 1, dadurch gekennzeichnet, daß der Reflektor (2) als Glasprisma realisiert ist.

8. Optische Anordnung nach Anspruch 1, dadurch gekennzeichnet, daß der Lichtwellenleiter (6) aus einem Mehrfaserlichtwellenleiter besteht.

9. Optische Anordnung nach einem der vorhergehenden Ansprüche, dadurch gekennzeichnet, daß mehrere Reflektoren gleichmäßig verteilt auf dem Rotor angebracht sind, so daß eine günstige Abstimmung zwischen der betreffenden kritischen Drehzahl und dem Resonanzverhalten der piezokeramischen Platte und/oder dem zugehörigen Resonator ermöglicht ist.

10. Optische Anordnung nach einem der vorhergehenden Ansprüche, dadurch gekennzeichnet, daß der optoelektrische Wandler (7) und der Schallgeber (8) an einem von dem Rotor (1) entfernten Ort, insbesondere in einem Kontrollraum, angeordnet sind.

## Claims

1. An optical arrangement for monitoring critical numbers of revolutions of rotating devices, wherein there is arranged at least one reflector in the vicinity of the periphery of a rotor which is to be monitored, there is arranged a light source or the end of a lightwave conductor at a distance from and with an appropriate angle of incidence in relation to the reflector, which light source or lightwave conductor end transmits an input beam in the direction of the reflector, a further lightwave conductor is arranged at an appropriate distance and with an appropriate angle of reflection in relation to the reflector in such manner that an output beam produced by reflection at the reflector strikes the input end surface of this lightwave conductor, characterised in that the further lightwave conductor (6) is linked to an optoelectric transducer (7), whose electric output is connected to an echo generator (8) generating a warning signal, the echo generator (8) is constructed as a piezoceramic plate with a resonator, and that the resonator possesses a natural resonance which is adapted to the pulse frequency of the output beam (5) caused by the critical number of revolutions.

2. An optical arrangement as claimed in Claim 1, characterised in that the optoelectric transducer (7) is a photo element.

3. An optical arrangement as claimed in Claim 1, characterised in that the optoelectric transducer (7) is a photo diode.

4. An optical arrangement as claimed in Claim 1, characterised in that the light source (3) is a coherence light source.

5. An optical arrangement as claimed in Claim 1, characterised in that the reflector (2) is a mirror.

6. An optical arrangement as claimed in Claim 1, characterised in that the reflector (2) is a partially reflecting part of the rotor surface.

7. An optical arrangement as claimed in Claim 1, characterised in that the reflector (2) is a glass prism.

8. An optical arrangement as claimed in Claim 1, characterised in that the lightwave conductor (6) consists of a multi-fibre lightwave conductor.

9. An optical arrangement as claimed in one of the preceding Claims, characterised in that a plurality of reflectors are evenly distributed on the rotor, so that an advantageous adaptation is possible between the respective critical number of revolutions and the resonance behaviour of the piezoelectric plate and/or the assigned resonator.

10. An optical arrangement as claimed in one of the preceding Claims, characterised in that the optoelectric transducer (7) and the echo generator (8) are remotely arranged, which is at a distance from the rotor (1), in particular in a control room.

**Revendications**

1. Agencement optique pour le contrôle du nombre de tours critique de dispositifs tournants, dans lequel au moins un réflecteur est disposé sur un rotor à contrôler, au voisinage de la périphérie du rotor, et dans lequel à une certaine distance et suivant un angle d'incidence approprié par rapport au réflecteur, est disposée une source lumineuse ou l'extrémité d'un guide d'ondes lumineuses qui émet un faisceau d'entrée en direction du réflecteur, un autre guide d'ondes lumineuses étant disposé, à une distance appropriée et en formant un angle de réflexion approprié par rapport au réflecteur, de manière qu'un faisceau de sortie, qui provient de la réflexion sur le réflecteur, tombe sur la surface frontale d'entrée de ce guide d'ondes lumineuses, caractérisé par le fait qu'à l'autre guide d'ondes lumineuses (6) est raccordé un transducteur optoélectrique (7) dont la sortie est reliée à une source sonore (8), que la source sonore (8) est réalisée sous la forme d'une plaque piézocéramique avec un résonateur, et que le résonateur possède une résonance propre qui est adaptée à la fréquence de répétition des impulsions du faisceau de sortie (5) provoquée par le nombre de tours critique.

2. Agencement optique suivant la revendication 1, caractérisé par le fait que le transducteur optoélectrique (7) est realisé sous la forme d'un élément photosensible.

3. Agencement optique suivant la revendication 1, caractérisé par le fait que le transducteur optoélectrique (7) est réalisé sous la forme d'une diode photosensible.

4. Agencement optique suivant la revendication 1, caractérisé par le fait que la source lumineuse (3) est une source de lumière cohérente.

5. Agencement optique suivant la revendication 1, caractérisé par le fait que le réflecteur (2) est réalisé sous la forme d'un miroir.

6. Agencement optique suivant la revendication 1, caractérisé par le fait que le réflecteur (2) est réalisé sous la forme d'un dépôt partiel d'une couche réfléchissante sur la surface du rotor.

7. Agencement optique suivant la revendication 1, caractérisé par le fait que le réflecteur (2) est réalisé sous la forme d'un prisme de verre.

8. Agencement optique suivant la revendication 1, caractérisé par le fait que le guide d'ondes lumineuses (6) est constitué par un guide d'ondes lumineuses à plusieurs fibres.

9. Agencement optique suivant l'une des revendications précédentes, caractérisé par le fait que plusieurs réflecteurs sont répartis uniformément sur le rotor, de manière à permettre un accord approprié entre le nombre de tours critique concerné et le comportement en résonance de la plaque piézocéramique et/ou le résonateur associé.

10. Agencement optique suivant l'une des revendications précédentes, caractérisé par le fait que le transducteur optoélectrique (7) et la source sonore (8) sont disposés en un endroit éloigné du rotor (1), notamment dans une salle de contrôle.